# EUROPEAN PATENT APPLICATION

(11) **EP 4 711 625 A1**
(43) Date of publication of application: **18.03.2026**
(21) Application number: 24200432.3
(22) Date of filing: 14.09.2024
(51) Int. Cl.: F15B 11/00, F15B 13/02, F15B 20/00, B62D 5/06, B62D 7/14

(54) **VALVE ASSEMBLY FOR A STEERING SYSTEM, STEERING SYSTEM AND VALVE BLOCK**

(71) Applicant: KB Intellectual Property GmbH & Co. KG, 82049 Pullach (DE)
(72) Inventor: GYURKÓ, Zoltán, 1047 Budapest (HU); NASZEK, Attila, 1118 Budapest (HU); NEMETH, Huba, 1116 Budapest (HU); STRAUB, Kornel, 2013 Pomáz (HU); TOTH, Janos, 6000 Kecskemét (HU); SINKA, Örs, 6000 Kecskemét (HU)

(57) **Abstract**

The present invention refers to a valve assembly (100) for a steering system (1) of a vehicle, the valve assembly (100) comprising at least a first valve unit (110) and a second valve unit (120),wherein the valve assembly (100) is configured to connect a first external fluid connection (10) and a second external fluid connection (20) to a hydraulic circuit, wherein the first and second valve units (110; 120) are configured to be normally closed valves. Further, the present invention refers to a steering system (1) and a valve block (130).

## Description

The present invention refers to a valve assembly for a steering system, a steering system and a corresponding valve block.

Typically, hydraulic systems are used for lifting or moving of heavy weights. In case of a malfunction in the hydraulic pipes, lines and/or hoses the lifted heavy weights can fall rapidly. In this case serious personal injuries and/or damages can happen with high probability.

In order to avoid such situations, hose burst protection valves are mandatory to be used in these kinds of hydraulic systems. These valves can perceive a line burst situation and can rapidly close the hydraulic cylinder such that the hydraulic fluid, like e.g. oil, cannot escape further from the hydraulic cylinder. Thereby, the falling movement is stopped.

These protection valves are typically used on both ends of a protected hose, not only on the cylinder side but also on the supply side, to avoid the loss of hydraulic fluid from the rest of the operational hydraulic system.

By closing of the cylinder ports in case of hose failures these kinds of burst protection valves prevent the further movement of the loaded hydraulic cylinder. Once the protected cylinder is not loaded anymore, the movement of the cylinder becomes possible again.

Known protection valves have a normally open condition (at least in one direction). When the pressure drops on the protected port, the valve will open again and air can penetrate the system and/or hydraulic oil can flow to the environment.

In particular, heavy commercial vehicles are sometimes equipped with more than one steered front axles, representing so called multi-axle steered vehicles. The most frequent of such applications are double/tandem steered front axles, whereby one axle is actuated by a standard hydraulic or electrohydraulic power steering gear and the second front axle is mechanically coupled to the first axle and additionally its actuation force is partly covered by a so-called booster cylinder. Such booster-cylinder is supplied over external hydraulic pipes (booster circuit) form the main steering gear. Thus, it can be prone to pipe defects as well.

Steering application protection requirements for multi-steered, e.g. tandem steered, axle cases can be:
- In case of line rupture at the booster circuit the loss of main system pressure must be prevented immediately, otherwise there is a full steering loss even on the front axle.
- Once this protection function is activated, the safety valves must remain closed at any system conditions to be able to actuate the first steered axle. The main hydraulic system performance of the steering gear shall not be influenced in case of any failure of the booster circuit.
- Only intended initialization is allowed at startup.

Solutions with normally open valves in one direction are e.g. known from US 7,409,825 B2, JP 3 685 923 B2, EP 2 354 564 B1, GB 2 485 157 A, CN 105 003 700 A and GB 2 514 112 A.

It is an object of the invention to provide an efficient and simple burst protection for a hydraulic system, in particular a steering system with booster cylinder for dual/tandem steered axle vehicles, in order to avoid loos of hydraulic fluid and/or air suction in case of failure of a fluid connection.

These objectives are resolved by a valve assembly according to independent claim 1 and concerning a steering system by independent claim 10 and concerning a valve block by independent claim 15. Preferred embodiments are addressed by the dependent claims respectively.

According to the present invention valve assembly for a steering system of a vehicle, in particular a multi-axle steered vehicle, is provided, the valve assembly comprising at least a first valve unit and a second valve unit, wherein the valve assembly is configured to connect a first external fluid connection element and a second external fluid connection element to a hydraulic circuit. The first valve unit is arranged in connection with the first external fluid connection element, wherein the second valve unit is arranged in connection with the second external fluid connection. The first and second valve units are configured to comprise normally closed valves, respectively.

The present invention is based on the idea to provide a valve assembly with valve units being capable of protecting a hydraulic circuit form pressure loss or air suction when a defect event, like a hydraulic hose/line/pipe breakage occurs.

In such failure situation, the valve assembly, namely the respective valve unit, can cut off the respective external fluid connection element/line in an efficient and fast manner, in particular by the valve units being provided as/with normally closed valve settings.

In particular, by the present invention a booster cylinder protection valve can be provided with normally closed hydraulic valve. The initial opening of the valve can preferably be provided by an external trigger source (hydraulic, pneumatic, mechanical, or electrical) only.

The hydraulic (supply) system's pressure can keep the valve open in any failure-free operational situation. In case of unintended pressure loss on this port, the valve closes immediately and remains closed at any circumstances. The result is a protected hydraulic system against further pressure loss, loss of hydraulic oil to the environment and prevention of air suction to the hydraulic system. The damaged circle is completely separated, so it cannot have any influence on the main hydraulic system.

Using this novel protection valve it is possible to compose a closed hydraulic circuit for a booster cylinder in case of dual-/tandem-steered vehicles, whereby the protected Booster cylinder/actuator remains in both direction movable and hydraulically independent from the main steering hydraulic system in case of hose breakage.

Since the booster cylinder/actuator is not blocked, the steering action on the second axle is further possible from the main steering gear over the mechanical link even if a booster line protection event occurred.

According to one preferred embodiment the first valve unit and the second valve unit are provided as a common valve block, wherein the valve block comprises a first port, a second port, a third port, a fourth port. The first valve unit is arranged between the first and second port of the valve block, and the second valve unit is arranged between the third and fourth port of the valve block.

Preferably, the first/second valve units can be provided and handled as valve blocks, preferably simplifying and supporting the handling of the valve units.

According to another preferred embodiment each of the first and second valve units comprises at least one control port, wherein the at least one control port is preferably a fluid pressure sensitive control port.

According to a further preferred embodiment the at least one control port, in particular a primary control port, of the first valve unit comprises a connection with the first external fluid connection element, preferably via the first port of the valve assembly, in particular of the valve block, wherein the at least one control port, in particular a primary control port, of the second valve unit comprises a connection with the second external fluid connection element, preferably via the third port of the valve assembly, in particular of the valve block.

In another embodiment the at least one control port, in particular a secondary control port, of the first valve unit is connected to a first externally accessible control port of the valve assembly, in particular of the valve block, wherein the at least one control port, in particular a secondary control port, of the second valve unit is connected to a second externally accessible control port of the valve assembly, in particular of the valve block.

Preferably, the first/second valve unit can be controlled either by controlled via an external input or by a pressure change/difference within the first/second external fluid connection elements.

Thus, in case of a breakage or burst of one of the external fluid connection elements, the corresponding valve unit will be controlled accordingly, in particular be shifted into its normally closed state in order to avoid a pressure loss and thus to protect and secure the hydraulic circuit, like e.g. a booster cylinder circuit or a hydraulic supply circuit.

In a further preferred embodiment the first and second valve units are provided as spring-loaded 2/2-way valve respectively.

In another embodiment of the present invention the valve assembly further comprises at least one bypass valve and at least one select-low valve, wherein the bypass valve comprises a first inlet being connected to the hydraulic circuit and the first valve unit and a second inlet being connected to the hydraulic circuit and the second valve unit, wherein the select-low-valve comprises
- a first inlet being connected to the first external fluid connection element and a second inlet being connected to the second external fluid connection element,
- an outlet being connected to a control port of the bypass valve,
whereby the bypass valve is capable of providing a fluidic shortcut connection between the hydraulic circuit, the first and second valve unit, in particular such that in a closed state of the first and second valve unit a fluid pressure from the hydraulic circuit to the first or second valve unit is redirectable to the hydraulic circuit.

In case of a failure of the first/second external fluid connection element/line/hose/pipe and the corresponding closed state of at least one of the valve units, the valve assembly can provide a safe state by executing a hydraulic shortcut which allows hydraulic pressure from the hydraulic circuit to return/be redirected to the hydraulic circuit again.

Namely, in case of a booster cylinder circuit, a corresponding booster cylinder can still be moved due to such hydraulic shortcut instead of being stuck, especially when one or both valve units are shifted in their closed state, e.g. due to external fluid connection element failure.

According to a further embodiment the bypass valve is a normally open valve, preferably a spring loaded 2/2-way valve being normally open.

In a further preferred embodiment the valve assembly is a protection valve assembly configured to connect a first and a second external fluid connection element, in particular a first and second hydraulic pipe, hydraulic line, hydraulic hose and/or the like, to a hydraulic circuit, in particular a hydraulic supply circuit, a booster cylinder circuit and/or the like.

Thus, the valve assembly according to the present invention is supposed to protect the correspondingly connected hydraulic circuit in case of the failure, breakage, blow-up, drain, burst or the like of a connect external fluid/hydraulic connection (element).

According to another aspect of the invention steering system, in particular a hydraulic steering system for a multi-axle steered vehicle, is provided comprising at least one first hydraulic circuit, preferably a hydraulic supply circuit, at least one second hydraulic circuit, preferably at least one booster cylinder circuit, at least one first external fluid connection element, at least one second external fluid connection element, at least one first valve assembly according to the present invention and at least one second valve assembly according to the present invention. The first hydraulic circuit is connected to the first and second external fluid connection elements via the first valve assembly, wherein the second hydraulic circuit is connected to the first and second external fluid connection elements via the second valve assembly.

In the context of the present invention, the steering system, comprising a valve assembly according to the present invention, is preferably intended to be a steering system having a booster cylinder circuit for supporting a hydraulic supply system, in particular for applications like dual-/tandem steered commercial vehicles.

According to one preferred embodiment the first hydraulic circuit is a hydraulic supply circuit being connected to the first valve assembly, wherein the at least one second hydraulic circuit is a booster cylinder circuit being connected to or integrated into the second valve assembly.

In one preferred embodiment the at least one second hydraulic circuit as a booster cylinder circuit comprises a booster cylinder, preferably a bi-directional hydraulic cylinder, and a hydraulic reservoir.

In more detail, the booster cylinder circuit can be provided as an additional circuit being connected to a valve assembly. Alternatively, the booster cylinder and the hydraulic reservoir can be directly integrated into a correspondingly designed valve assembly.

With respect to the supply circuit, it is preferred that the valve assembly is provided as a modular component being connected to the hydraulic supply system. Alternatively, also an integration of the supply circuit and/or of several components of a supply circuit into a valve assembly according to the present invention may be possible.

According to a further embodiment a first hydraulic side of the booster cylinder is connected to the first valve unit and a first inlet of the bypass valve, wherein the second hydraulic side of the booster cylinder is connected to the second valve unit and a second inlet of the bypass valve, wherein the hydraulic reservoir is preferably connected to the first inlet or the second inlet of the bypass valve.

In one preferred embodiment the at least two valve assemblies are arranged along end side areas of the at least one first and second external fluid connection elements such that the valve assemblies provide a protection of the first hydraulic circuit and the second hydraulic circuit against a failure, in particular a breakage or burst, of the first and/or second external fluid connection element.

According to another aspect of the invention a valve block for a valve assembly and/or a steering circuit according to the present invention is provided, with the valve block comprising a first and a second valve unit, wherein the first valve unit is configured to be connected the first external fluid connection element and the second valve unit is configured to be connected with the second external fluid connection element, wherein the first and second valve units are configured to be or comprise normally closed valves.

Thus, the valve block according to the present invention can be provided as an exchangeable component, allowing for a modular setup with hydraulic supply circuits and/or an arbitrary amount of booster cylinder circuits.

All of the advantages and technical effects being described in the context of the valve assembly can also be applied, individually or commonly, for the steering system and/or the valve block according to the present invention.

Further details and advantages of the present invention are explained and described in more detail in the context of the embodiment as illustrated by the enclosed figures.

It is schematically shown:
- Fig. 1: an embodiment of a valve unit;
- Fig. 2: an embodiment of a steering system, including multiple valve units according to Fig. 1;
- Fig. 3: an overview of a steering system according to one embodiment;
- Fig. 4: an overview of a steering system according to another embodiment; and
- Fig. 5: an overview of a steering system according to another embodiment.

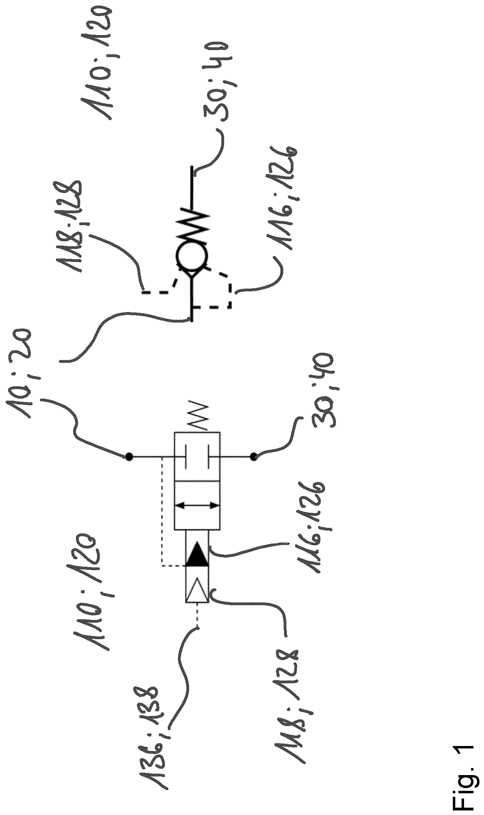

Fig. 1 shows an embodiment of a valve unit 100, namely a detailed symbolic (Fig. 1, left illustration) and a simplified symbolic (Fig. 1, right illustration) of a valve as comprised by a first and/second valve unit 110; 120 according to an embodiment of the present invention.

The valve of a valve unit 110; 120 is preferably provided as a spring loaded 2/2-way valve being normally closed.

According to Fig. 1 the valve unit 110; 120 can comprise an inlet being connected to a hydraulic circuit 30; 40 and an inlet being connected to an external fluid connection element 10; 20, like e.g. a hydraulic hose, pipe or line.

Moreover, the valve unit 110; 120 comprises at least one control port, preferably two control ports 116; 118; 126; 128. A (primary) control port 116; 126 can comprise a connection to an external fluid connection element 10; 20. The (secondary) control port 118; 128 can be connected to an external control port, in particular an externally accessible control port.

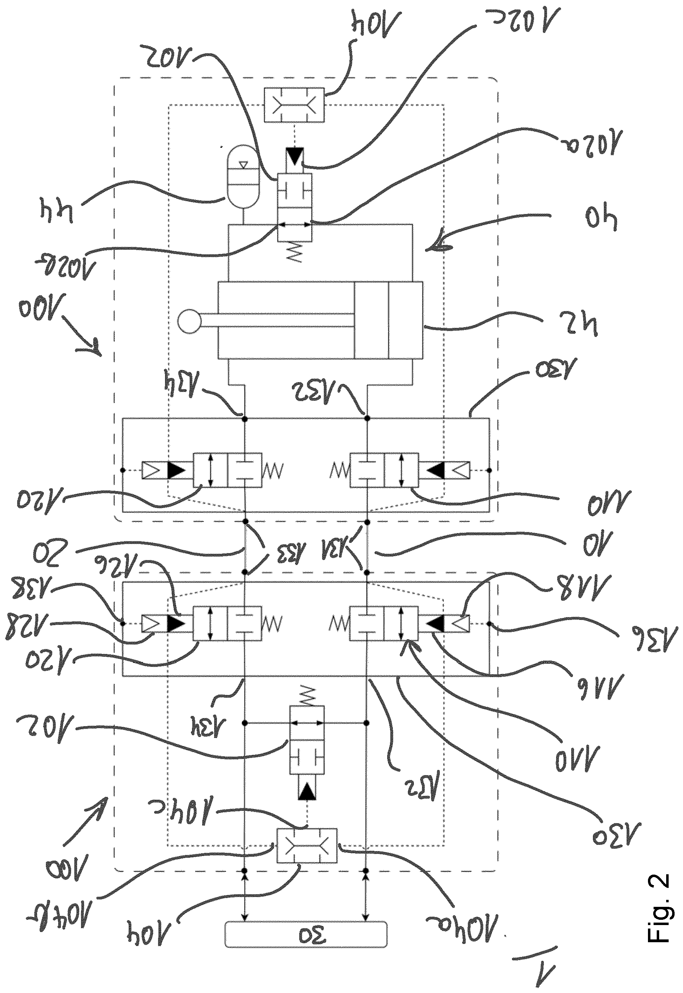

Fig. 2 shows an embodiment of a steering system 1, including multiple first and second valve units 110; 120 according to Fig. 1.

The steering system 100 is provided with multiple hydraulic circuits, namely a hydraulic supply circuit 30 and a booster cylinder circuit 40, which are to be connected via a first and second external fluid/hydraulic connection element 10; 20.

According to Fig. 1, the hydraulic supply circuit 30 and the booster cylinder circuit 40 are provided with a valve assembly 100 respectively.

The hydraulic supply circuit 30 and the booster cylinder circuit 40 are connected with a first and second external fluid connection element 10; 20, which may be hydraulic hoses, pipes, lines or the like.

In particular, according to Fig. 2 the hydraulic supply circuit 30 and the booster cylinder circuit 40 are connected by the external fluid connection elements 10; 20 via their respective valve assembly 100.

The hydraulic supply system 30 is coupled to its associated valve assembly 100. As an alternative embodiment of the valve assembly 100, the booster cylinder circuit is integrated into its associated valve assembly 100 according to Fig. 2. Alternatively, the booster cylinder circuit 40 may also be embodied as a separate circuit being connected to its associated valve assembly 100.

The valve assembly 100 is respectively provided with a first and second valve unit 110; 120 being arranged in a valve block 130 in Fig. 2. The valve assemblies 100, preferably the valve block 130, in particular the first and second valve units 110; 120, provide first and second ports 131; 132 as well as third and fourth ports 133; 134.

The valve units 110; 120 are connected to the first and second external fluid connection elements 10; 20 via the first and third ports 131; 133.

In particular, the valve units 110; 120 are and/or comprise normally closed valves.

Moreover, the valve units 110; 121 may be provided as 2/2-way valves being spring loaded.

The valve units 110; 120 further comprise a first and a second control port 116; 118; 126; 128, whereby the first control port 116; 126 provides a connection to the first/second external fluid connection element 10; 20, preferably via the first/third port 131; 133, in order to receive a hydraulic pressure (signal).

The second control port 118; 128 of the first/second valve unit 110; 120 is connected to an external control port for the first/second valve unit 136; 138 of the valve block 130/the valve assembly 100 being externally accessible.

Via such external control ports 136; 138 also an external initial trigger can be provided in order to shit the valve units 110; 120 initially form their normally closed into an open sate.

Moreover, the first valve unit 110 is comprises a hydraulic connection to the hydraulic supply circuit 30 via the second port 132 and the second valve unit 120 comprises a hydraulic connection to the hydraulic supply circuit 30 via the fourth port 134.

In particular in case of the arrangement of the hydraulic supply circuit 30 with its associated valve assembly 100, the second/third port 132; 134 can also be considered as ports of the valve assembly 100 by which the hydraulic supply circuit is connectable with the valve assembly 100.

The valve assemblies can further comprise a bypass valve 102 and a select-low valve 104.

The bypass valve 102 comprises a first inlet 102a being in fluid connection with the first valve unit 110 and the hydraulic supply circuit 30, in particular along a first connection side and in line with the first external fluid connection element 10, whereby a second inlet 102 of the bypass valve 102 is in fluid connection with the second valve unit 120 and the hydraulic supply circuit 30, in particular along a second connection side and in line with the second external fluid connection element 20.

The bypass valve 102 is arranged in a way, the a hydraulic pressure from the hydraulic supply circuit can be directly redirected back to the hydraulic supply circuit such that the first and second valve units 110; 120 are shortcut. Hence, in case the first and second valve units 110; 120 are shifted into a closed state, the hydraulic supply circuit can stay operational.

The select-low valve 104 comprises a first inlet 104a being in fluid connection with the first external fluid connection element 10, preferably with/via the first port 131, whereby a second inlet 104b of the select-low valve 104 is in fluid connection with the second external fluid connection element 20, preferably with/via the third port 133.

Thus, at least a hydraulic pressure (change) along the first/second external fluid connection elements can be forwarded to the select-low valve 102.

An outlet 104c of the select-low valve 104 is connected to a control port 102c of the bypass valve 102 such that the bypass valve, being a normally open valve, can be controlled according to the hydraulic pressure as forwarded/provided along the select-low valve 104.

Moreover, concerning the integral embodiment of the booster cylinder circuit 40 according to Fig. 2, the setup of the valve block 130 with first and second valve units 110; 120 as well as the bypass valve 102 and the select-low valve 104 is similar.

The two hydraulic sides of the booster cylinder 42 are arranged between the first/second valve units 110; 120 and first/second inlets 102a; 102b of the bypass valve 102 respectively.

The hydraulic reservoir 44 can be arranged in connection with the first or second inlet of the bypass valve 102.

In further detail concerning the functionality of the steering system 1 according to Fig. 2, the protection valve assemblies 100, with the first and second valve units, preferably in form of the valve blocks 130, are assembled between the main hydraulic system, i.e. the hydraulic supply system 30, and an external hydraulic booster cylinder 40 on each side of the hydraulic pipes 10; 20.

The protection valve units 110; 120 are normally closed, so it must be initiated to the open state, preferably via external source mechanically, pneumatically, hydraulically, or electrically. In particular, no unintended initialization may be possible without applying the external trigger source, e.g. via the external control ports 136; 138.

The initialization of the valve units 110; 120 can happen e.g. during initial system fill up with hydraulic fluid/oil to the nominal system pressure. Such system pressures can be between a minimum pressure of 1.5 to 5 bar and a maximum pressure 180 to 200 bar.

Once the valve units 110; 120 are initiated and the steering system 1 is filled up with hydraulic fluid/oil to the minimum system pressure the valve units 110; 120 remain open at any failure-free system condition.

In case of interruption of the external hydraulic hoses/pipes/lines/fluid connection elements 10; 20, the effect of the rapidly decreasing pressure in the external hoses 10; 20 will lead to close the protection valve units 110; 120 on each side of the hydraulic hoses 10; 20. Until the external initialization is applied again via the externally accessible control ports 136; 138 of the valve block(s) 130, the valve units 110; 120 remain closed at any circumstances.

The main hydraulic (supply) system 30 is protected against loss of system pressure, loss of hydraulic oil and suction of air to the hydraulic circuit, therefore no performance degradation can happen in the protected main hydraulic steering (gear) system 100.

Under failure-free system conditions the bypass valve 102 of the booster cylinder circuit 40 is closed by the system pressure from the external hydraulic hoses/external fluid connection elements 10; 20 controlling a select-low (hydraulic) valve 104.

In case of line protection event, the bypass valve 102 switches to open state and connects both hydraulic sides of the booster cylinder 42 together, so in case of external mechanical demand (originated e.g. from the steering gear of the first axle) the hydraulic oil can flow between the two hydraulic sides of the booster cylinder 42 and the protected booster cylinder 42 can move without any significant hydraulic resistance.

In case the volume changes of the two sides are unequal by a given stroke change (e.g. due to the on side cylinder rod) a hydraulic reservoir 44 may be added to compensate the unequal liquid flow.

From the hydraulic supply circuit 30 the select-low valve 104 and the normally open bypass valve 102 is an option to short circuit the output lines, in particular for a case of no other remaining hydraulic actuator/cylinder being present in remaining hydraulic steering circuit/system 100.

The bypass valve 102 is under failure-free system conditions in closed state. In a line protection event, the dropped pressure on the select-low valve 104 opens the bypass valve 102 so the hydraulic fluid/oil can freely flow between the two main hydraulic supply system sides. This protects the main hydraulic system from overload.

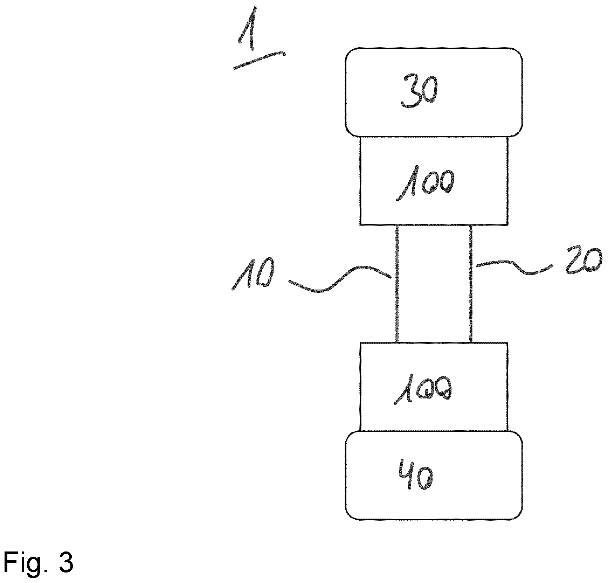

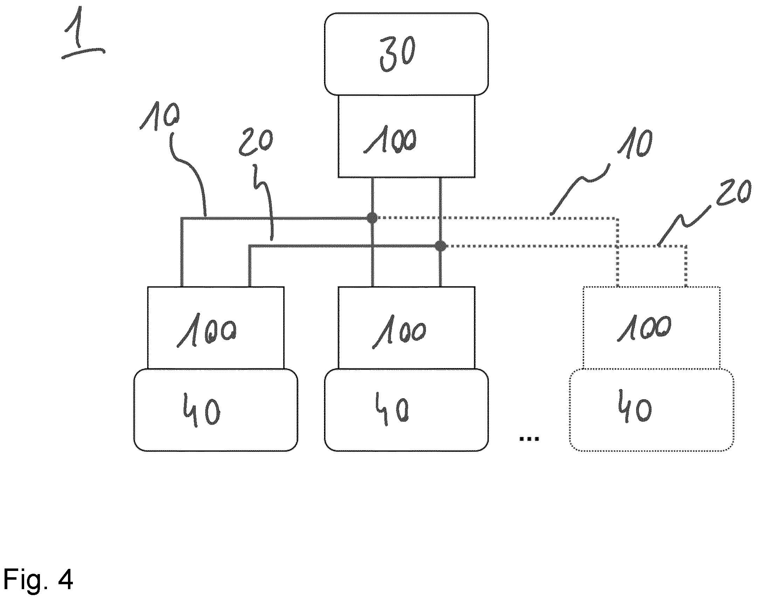

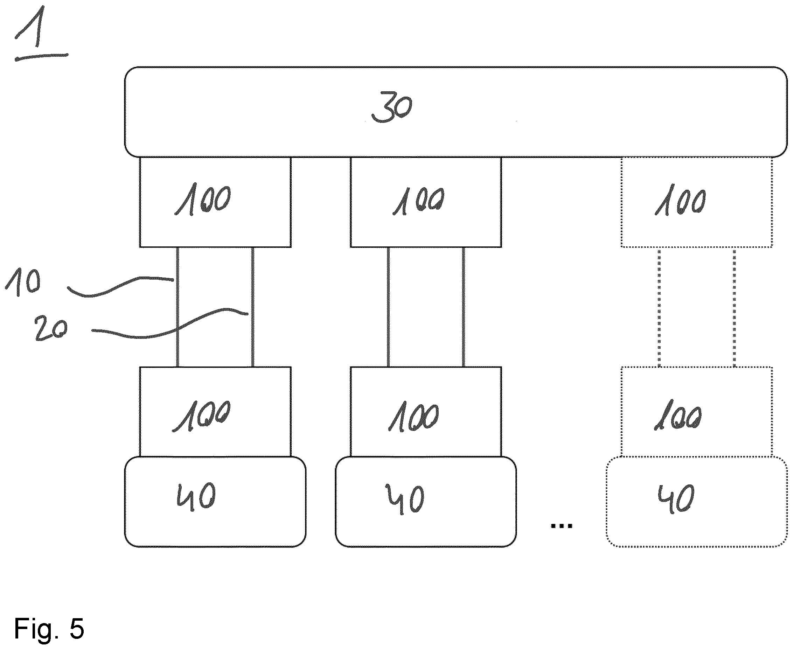

In Fig. 3 to Fig. 5 overviews of different embodiments of a steering system 1 are illustrated.

In particular, valve assemblies 100 are provided on the end side areas of the first and second external fluid connection elements 10; 20, preferably arranged or integrated with the hydraulic supply circuit 30 and/or the booster cylinder circuit 40.

A hydraulic supply circuit 30 of a steering system 1 can be provided with one or multiple valve assemblies 100, particularly depending on the number of booster cylinder circuit 40 being provided.

Preferably, each booster cylinder circuit 40 is combined with a particularly assigned valve assembly 100.

Thus, the combination of each booster cylinder circuit 40 and a corresponding valve assembly 100 is connected via a first and second external fluid connection element 10; 20.

Depending on the specific application and the level of protection, such multiple booster cylinder circuits 40 and associated valve assemblies 100 can be combined with a single or multiple, in particular the same amount of, valve assemblies 100 on the hydraulic supply circuit's side 30.

Hence, the ratio of valve assemblies 100 on the hydraulic supply circuit's side and the booster cylinder circuit's side can be 1:1, i.e. equal amounts of valve assemblies 100 being provided. Alternatively, a lower number of valve assemblies 100 can be provided on the hydraulic supply circuit's side.

In summary, by the present invention a protection valve assembly 100 can be provided for a steering system 1, whereby hydraulic circuits can be protected against failure of external hydraulic connections 10; 20 like hoses, pipes or lines, thus preventing a hydraulic pressure loss and air suction within/by the hydraulic circuits.

In particular, the valve units 110; 120 being provided as/with normally closed valves provide an efficient and safe protection against leakages due to failure of such external hydraulic connection lines, by also keeping the hydraulic circuits operational in case of such a failure condition.

Moreover, the embodiment of the valve units 110; 120 as valve blocks and/or as valve assemblies may provide a modular setup for protection on both ends of the external hydraulic connection elements/lines, being easy and efficient to handle.

### REFERENCE SIGNS

- 1: Steering system
- 10: First external fluid connection element
- 20: Second external fluid connection element
- 30: Hydraulic supply circuit
- 40: Booster cylinder circuit
- 42: Booster cylinder
- 44: Hydraulic reservoir
- 100: Valve assembly
- 102: Bypass valve
- 102a: First inlet
- 102b: Second inlet
- 102c: Control Port
- 104: Select-low valve
- 104a: First inlet
- 104b: Second inlet
- 104c: Outlet
- 110: First valve unit
- 116: (primary) Control port
- 118: (secondary) Control port
- 120: Second valve unit
- 126: (primary) Control port
- 128: (secondary) Control port
- 130: Valve block
- 131: First port
- 132: Second port
- 133: Third port
- 134: Fourth port
- 136: External control port for first valve unit
- 138: External control port for second valve unit

## Claims

1. Valve assembly (100) for a steering system (1) of a vehicle, in particular a multi-axle steered vehicle,
the valve assembly (100) comprising at least a first valve unit (110) and a second valve unit (120),
wherein the valve assembly (100) is configured to connect a first external fluid connection element (10) and a second external fluid connection element (20) to a hydraulic circuit (30; 40),
wherein the first valve unit (110) is arranged in connection with the first external fluid connection element (10),
wherein the second valve unit (120) is arranged in connection with the second external fluid connection (20),
wherein the first and second valve units (110; 120) are configured to comprise normally closed valves.

2. Valve assembly (100) according to claim 1,
**characterized in that**
the first valve unit (110) and the second valve unit (120) are provided as a common valve block (130),
wherein the valve block (130) comprises a first port (131), a second port (132), a third port (133), a fourth port (134),
wherein the first valve unit (110) is arranged between the first and second port (131; 132) of the valve block (130), and
wherein the second valve unit (120) is arranged between the third and fourth port (133; 134) of the valve block (130).

3. Valve assembly (100) according to one of the preceding claims,
**characterized in**
each of the first and second valve units (110; 120) comprises at least one control port (116; 118; 126; 128), wherein the at least one control port is preferably a fluid pressure sensitive control port.

4. Valve assembly (100) according to claim 3,
**characterized in that**
the at least one control port (116; 118), in particular a primary control port (116), of the first valve unit (110) comprises a connection with the first external fluid connection element (10), preferably via the first port (131) of the valve assembly (100), in particular of the valve block (130),
wherein the at least one control port (126; 128), in particular a primary control port (126), of the second valve unit (120) comprises a connection with the second external fluid connection element (20), preferably via the third port (133) of the valve assembly (100), in particular of the valve block (130).

5. Valve assembly (100) according to one of claims 3 to 4,
**characterized in that**
the at least one control port (116; 118), in particular a secondary control port (118), of the first valve unit (110) is connected to a first externally accessible control port (136) of the valve assembly (100), in particular of the valve block (130),
wherein the at least one control port (126; 128), in particular a secondary control port (128), of the second valve unit (120) is connected to a second externally accessible control port (138) of the valve assembly (100), in particular of the valve block (130).

6. Valve assembly (100) according to one of the preceding claims,
**characterized in that**
the first and second valve units (110; 120) are provided as spring-loaded 2/2-way valve respectively.

7. Valve assembly (100) according to one of the preceding claims,
**characterized in that**
the valve assembly (100) further comprises at least one bypass valve (102) and at least one select-low valve (104),
wherein the bypass valve (102) comprises a first inlet (102a) being connected to the hydraulic circuit (30; 40) and the first valve unit (110) and a second inlet (102b) being connected to the hydraulic circuit (30; 40) and the second valve unit (120),
wherein the select-low-valve (104) comprises
- a first inlet (104a) being connected to the first external fluid connection element (10) and a second inlet (104b) being connected to the second external fluid connection element (20),
- an outlet (104c) being connected to a control port (102c) of the bypass valve (102),
whereby the bypass valve (102) is capable of providing a fluidic shortcut connection between the hydraulic circuit (30; 40), the first and second valve unit (110; 120), in particular such that in a closed state of the first and second valve unit (110; 120) a fluid pressure from the hydraulic circuit (30; 40) to the first or second valve unit (110; 120) is redirectable to the hydraulic circuit (30; 40).

8. Valve assembly (100) according to claim 7,
**characterized in that**
the bypass valve (102) is a normally open valve, preferably a spring loaded 2/2-way valve being normally open.

9. Valve assembly (100) according to one of the preceding claims,
**characterized in that**
the valve assembly (100) is a protection valve assembly configured to connect a first and a second external fluid connection element (10; 20), in particular a first and second hydraulic pipe, hydraulic line, hydraulic hose and/or the like, to a hydraulic circuit (30; 40), in particular a hydraulic supply circuit (30), a booster cylinder circuit (40) and/or the like.

10. Steering system (1), in particular a hydraulic steering system for a multi-axle steered vehicle, comprising at least one first hydraulic circuit (30), preferably a hydraulic supply circuit, at least one second hydraulic circuit (40), preferably at least one booster cylinder circuit, at least one first external fluid connection element (10), at least one second external fluid connection element (20), at least one first valve assembly (110) according to one of the preceding claims and at least one second valve assembly (120) according to one of the preceding claims,
wherein the first hydraulic circuit (30) is connected to the first and second external fluid connection elements (10; 20) via the first valve assembly (100),
wherein the second hydraulic circuit (40) is connected to the first and second external fluid connection elements (10; 20) via the second valve assembly (100).

11. Steering system (1) according to claim 10,
**characterized in that**
the first hydraulic circuit (30) is a hydraulic supply circuit being connected to the first valve assembly (100),
wherein the at least one second hydraulic circuit (40) is a booster cylinder circuit being connected to or integrated into the second valve assembly (100).

12. Steering system (1) according to one of claims 10 to 11,
**characterized in that**
the at least one second hydraulic circuit (40) as a booster cylinder circuit comprises a booster cylinder (42), preferably a bi-directional hydraulic cylinder, and a hydraulic reservoir (44).

13. Steering system (1) according to claim 12,
**characterized in that**
a first hydraulic side of the booster cylinder (42) is connected to the first valve unit (110) and a first inlet (102a) of the bypass valve (102),
wherein the second hydraulic side of the booster cylinder (42) is connected to the second valve unit (120) and a second inlet (102b) of the bypass valve (102),
wherein the hydraulic reservoir (44) is preferably connected to the first inlet (102a) or the second inlet (102b) of the bypass valve (102).

14. Steering system (1) according to one of claims 10 to 13,
**characterized in that**
the at least two valve assemblies (100) are arranged along end side areas of the at least one first and second external fluid connection elements (10; 20) such that the valve assemblies (100) provide a protection of the first hydraulic circuit (30) and the second hydraulic circuit (40) against a failure, in particular a breakage or burst, of the first and/or second external fluid connection element (30; 40).

15. Valve block (130) for a valve assembly (100) and/or a steering circuit (1) according to one of the preceding claims,
the valve block (130) comprising a first and a second valve unit (110; 120),
wherein the first valve unit (110) is configured to be connected the first external fluid connection element (10) and the second valve unit (120) is configured to be connected with the second external fluid connection element (20),
wherein the first and second valve units (110; 120) are configured to be normally closed valves.
